# EUROPEAN PATENT APPLICATION

(11) **EP 3 984 423 A1**
(43) Date of publication of application: **20.04.2022**
(21) Application number: 19932308.0
(22) Date of filing: 11.06.2019
(51) Int. Cl.: A47J 36/06, A47J 27/00

(54) **COOKING UTENSIL WITH STEAM RELEASE SYSTEM**

(71) Applicant: Blalumar, S.L., 39110 Santa Cruz de Bezana (Cantabria) (ES)
(72) Inventor: GOMEZ-CASUSO SERNA, Manuel Angel, 39110 SANTA CRUZ DE BEZANA (CANTABRIA) (ES)
(74) Representative: Cabinet Beau de Loménie
(86) International application number: PCT/ES2019/070408
(87) International publication number: WO 2020/249830

(57) **Abstract**

The present invention relates to a kitchen utensil with steam exhaust system comprising a container (1) with a closure lid (2) that is arranged on the edge (3) of the mouth of the container (1), wherein the edge (3) of the mouth of the container (1) is formed with at least one warped area (4), and the periphery of the lid (2) with a respective warped area (5) corresponding to the warped area (4) of the edge (3) of the mouth of the container (1), allowing the lid (2) to be arranged in its position on the container (1), selectively, with the warped area (5) of the periphery of the lid (2) coinciding with the warped area (4) of the edge (3) of the mouth of the container (1), or in a position of progressive offset between both warped areas (4) and (5).

## Description

### Technical field

The present invention is related to kitchen utensils formed by a container that is closed with a lid, proposing a utensil with a system that enables steam exhaust in an advantageous way, with an embodiment that does not affect the cost or construction complexity of the kitchen utensil.

### State of the art

Some cooking containers, such as pots, pans, etc., are frequently used during the functions thereof by arranging a closure lid on them, in order to improve cooking or frying and avoid splashing to the outside of the container.

In these cases, the use of lids provided with steam exhaust systems is known, to avoid condensation inside the container that can distort the characteristics of the cooked products that are obtained.

In this regard, there are lids provided with openings for steam exhaust, which enables them to fulfil said steam exhaust function, but limits the functions of use, since it does not enable the container to be completely closed when, due to the characteristics of the cooking or for the maintenance thereof, it is not of interest that the closure has exhausts.

There are also lids provided with exhaust valves that open when the steam inside the container reaches a certain pressure, as well as lids provided with adjustable openings by means of a practicable closure, these systems impacting the cost of the lids and, consequently, in the set of containers, in addition to the fact that, due to being systems that comprise operating elements incorporated in the lids, they can get jammed with the consequent failure of the steam exhaust function that they must fulfil.

In light of such drawbacks, it is therefore necessary to develop a system that enables and effectively maintains the steam exhaust in the use of containers in cooking functions, without significantly affecting the manufacturing cost of the container.

### Object of the invention

According to the present invention, a kitchen utensil is proposed with a simple and practical system that is totally effective for steam exhaust in the cooking containers, enabling, when it is of interest, however, a perfect closure of the container when required.

The kitchen utensil object of the invention comprises a container that has a closure lid that is arranged on the mouth of the container, the mouth of the container being provided with an edge that has at least one warped area, while the closure lid has on the contour thereof, respectively, another warped area in correspondence with the warped area of the edge of the mouth of the container.

Thus, a kitchen utensil is obtained, which has a correspondence system between the lid and the edge of the mouth of the container, such that, depending on the position of the lid in the arrangement thereof on the container, a total closure can be established when the warped areas of the contour of the lid and of the edge of the mouth of the container are positioned in correspondence, while, when said warped areas of the lid and the edge of the mouth of the container do not coincide, an opening remains that enables steam to come out from inside the container through the opening defined between the lid and the container.

Said closure and opening positions of the steam exhaust are obtained in a very simple way, by simply turning the lid in the position thereof on the container, resulting in that, depending on the degree of said turning at a certain angle, the steam exhaust opening varies from a minimum to a maximum, said opening being able to be regulated at will. The closure and opening positions can be obtained by dragging the lid over the edge of the mouth of the container, or by lifting the lid, twisting it in the air and replacing it on the container.

In addition, the kitchen utensil does not require relevant modifications in the cost of the formation of the container and the lid, nor does it include operating elements susceptible to jamming due to dirt or deformation with use, keeping the effectiveness of the steam exhaust closure and opening constant in the kitchen utensil.

Therefore, the proposed kitchen utensil has very advantageous features for the function for which it is intended, acquiring a life of its own and a preferential character with respect to conventional systems that are applied in the closure of cooking containers to enable steam exhaust from inside the containers.

### Description of the figures

Figure 1 shows a perspective view of a kitchen utensil with the steam exhaust system of the invention, in the closed position.
Figure 2 is a perspective view of the kitchen utensil of the preceding figure, in an open position to enable steam to escape.
Figure 3 is a perspective view according to a diametrical cross section of the kitchen utensil in the closed position of the steam exhaust system.

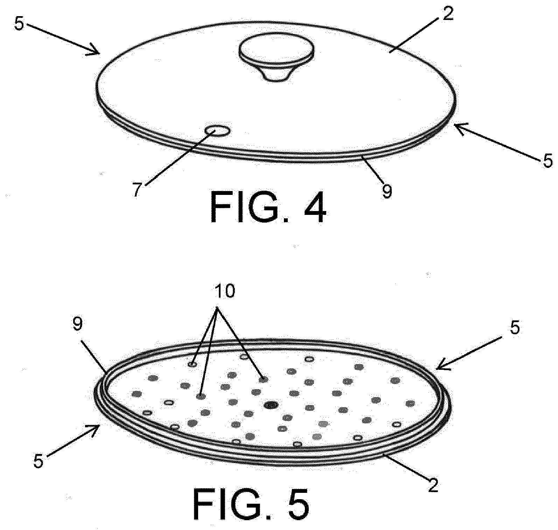

Figure 4 is a perspective view of the lid of the container seen from the upper face of the lid.
Figure 5 is a perspective view of the lid of the container seen from the lower face of the lid, wherein the surface of said face provided with anti-drip projections is seen.

### Detailed description of the invention

The object of the invention is a kitchen utensil with a steam exhaust system. The kitchen utensil is made up of a cooking container (1) the mouth of which is closed with a lid (2) that is arranged supported on the edge (3) of the mouth of the container (1).

The steam exhaust system is based on equipping the edge (3) of the mouth of the container (1) with at least one warped area (4), and equipping the periphery of the lid (2) with a respective warped area (5) reciprocally corresponding with said warped area (4) of the edge (3) of the mouth of the container (1).

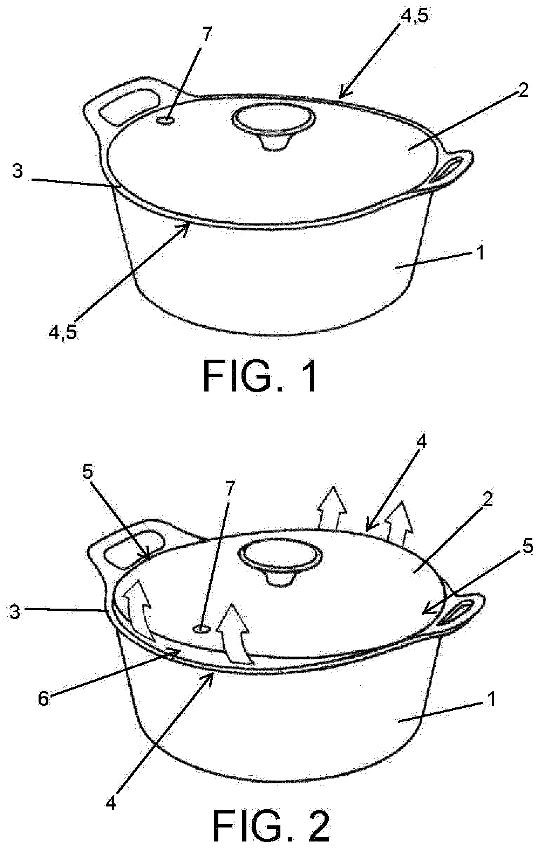

Thus, when the lid (2) is positioned on the container (1) the warped area (5) of the periphery of the cover (2) coincides with the warped area (4) of the edge (3) of the mouth of the container (1), a complete closure is established between the lid (2) and the container (1) that does not allow steam to escape from inside the container (1), as Figure 1 shows.

However, when the lid (2) is positioned on the container (1) so that the warped area (5) of the periphery of the lid (2) is offset with respect to the warped area (5) of the edge (3) of the mouth of the container (1), there is an opening (6) between both warped areas (4) and (5) through which the steam can escape from inside the container (1), as Figure 2 shows.

Said opening (6) between the warped areas (4) and (5) of the container (1) and the lid (2), is also variable depending on the position of the lid (2) with respect to the container (1), so that by rotating the lid (2) in its position on the container (1), the size of the opening (6) can be selectively adjusted at the discretion of the user from the closed position to a maximum opening and, consequently the capacity of the steam exhaust from inside the container (1) during cooking.

The possibility of steam exhaust and its regulation can also be established, to a greater or lesser extent, by shaping the edge (3) of the mouth of the container (1) with more warped areas (4), which can be identical or different, and the periphery of the lid (2) with as many respective warped areas (5) corresponding in their shapes with said warped areas (4) of the edge (3) of the mouth of the container (1).

To facilitate the positioning of the lid (2) in its arrangement on the container (1), with the steam exhaust system open or closed and the regulation of the opening (6) as required, the incorporation of a mark (7) is envisaged on the outer face of the lid (2), attached to or formed from the material of the lid (2), said mark (7) serving as a reference for placing the lid (2) on the container (1) in a predefined position.

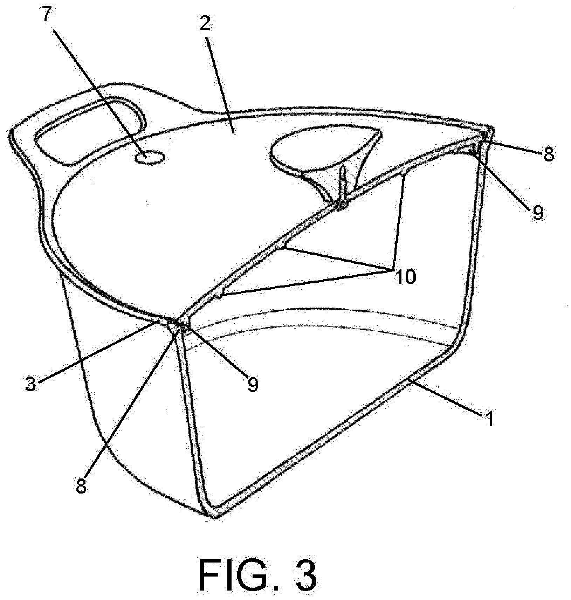

Furthermore, in order for a coupling to be defined between the lid (2) and the container (1) that ensures the closure between both, it is envisaged that the edge (3) of the mouth of the container (1) is shaped with a step (8) and the periphery of the lid (2) with a prominent rib (9) on the lower face of the lid (2), whereby a fit is established between the lid (2) and the container (1), such as can be seen in Figure 3.

The lower face of the lid (2) is also envisaged with a surface formed with small rounded projections (10), which retain the condensation that occurs on said lower face of the lid (2) while cooking in the container (1), thus avoiding a drip of condensation on the cooked items.

## Claims

1. A kitchen utensil with steam exhaust system, comprising a container (1) with a closure lid (2) that is arranged on the edge (3) of the mouth of the container (1), **characterised in that** the edge (3) of the mouth of the container (1) is formed with at least one warped area (4), and the periphery of the lid (2) with a respective warped area (5) corresponding to the warped area (4) of the edge (3) of the mouth of the container (1), allowing the lid (2) to be arranged in its position on the container (1), selectively, with the warped area (5) of the periphery of the lid (2) coinciding with the warped area (4) of the edge (3) of the mouth of the container (1), or in a position of progressive offset between the at least one warped area (4) of the edge (3) of the mouth of the container (1) and the respective warped area (5) of the periphery of the lid (2).

2. The kitchen utensil with steam exhaust system, according to the first claim, **characterised in that** the edge (3) of the mouth of the container (1) has two or more warped areas (4), identical or different, and the periphery of the lid (2) has as many warped areas (5) corresponding to said warped areas (4) of the edge (3) of the mouth of the container (1).

3. The kitchen utensil with steam exhaust system, according to any one of the preceding claims, **characterised in that** the lid (2) has a reference mark (7) for placing the lid (2) on the container (1) in a predefined position.

4. The kitchen utensil with steam exhaust system, according to any one of the preceding claims, **characterised in that** the edge (3) of the mouth of the container (1) is shaped with a step (8) and the periphery of the lid (2) is shaped with a rib (9) that protrudes towards the lower face of the lid (2), to establish a coupling fit in the positioning of the lid (2) on the container (1).

5. The kitchen utensil with steam exhaust system, according to any one of the preceding claims, **characterised in that** the lower face of the lid (2) has a surface provided with small rounded projections (10) for preventing the dripping of the condensation that is caused during cooking.
